Europäisches Patentamt

European Patent Office

Office européen des brevets

(19)

(11) **EP 1 101 199 B1**

(12) **FASCICULE DE BREVET EUROPEEN**

(45) Date de publication et mention
de la délivrance du brevet:
**03.12.2003 Bulletin 2003/49**

(21) Numéro de dépôt: **99936680.0**

(22) Date de dépôt: **03.08.1999**

(51) Int Cl.⁷: **G06T 17/20**

(86) Numéro de dépôt international:
**PCT/FR99/01923**

(87) Numéro de publication internationale:
**WO 00/008603 (17.02.2000 Gazette 2000/07)**

(54) **SIMPLIFICATION ET CODAGE D'UN MAILLAGE SOURCE**

MASCHENVEREINFACHUNG UND KODIERUNG VON MASCHEN

SIMPLIFYING AND CODING A SOURCE MESHING

(84) Etats contractants désignés:
**DE FR GB**

(30) Priorité: **03.08.1998 FR 9810094**

(43) Date de publication de la demande:
**23.05.2001 Bulletin 2001/21**

(73) Titulaires:
• **FRANCE TELECOM**
**75015 Paris (FR)**
• **TELEDIFFUSION DE FRANCE**
**75732 Paris Cédex 15 (FR)**

(72) Inventeur: **GIOIA, Patrick**
**F-35700 Rennes (FR)**

(74) Mandataire: **Vidon, Patrice**
**Cabinet Vidon**
**16 B, rue Jouanet - B.P. 90333**
**Technopole Atalante**
**35703 Rennes Cedex 7 (FR)**

(56) Documents cités:
**EP-A- 0 784 295**

• **HINKER P ET AL: "GEOMETRIC OPTIMIZATION" PROCEEDINGS OF THE CONFERENCE ON VISUALIZATION, SAN JOSE, OCT. 25 - 29, 1993,25 octobre 1993 (1993-10-25), pages 189-195, CP-18, XP000475427 INSTITUTE OF ELECTRICAL AND ELECTRONICS ENGINEERS**
• **GROSS M H ET AL: "EFFICIENT TRIANGULAR SURFACE APPROXIMATIONS USING WAVELETS AND QUADTREE DATA STRUCTURES" IEEE TRANSACTIONS ON VISUALIZATION AND COMPUTER GRAPHICS, vol. 2, no. 2, juin 1996 (1996-06), pages 130-143, XP000637707**
• **CIGNONI P ET AL: "A comparison of mesh simplification algorithms" COMPUTERS AND GRAPHICS, vol. 22, no. 1, 25 février 1998 (1998-02-25), page 37-54 XP004123425**
• **BRUNET P: "Including shape handles in recursive subdivision surfaces" COMPUTER AIDED GEOMETRIC DESIGN, vol. 5, no. 1, 1988, pages 41-50, XP002085289**

**Description**

Le domaine de l'invention est celui du codage d'images ou d'éléments d'images. Plus précisément, l'invention concerne la représentation et le codage adaptatifs de scènes (ou d'objets d'une scène) en trois dimensions (3D) représentées par des maillages.

L'invention trouve des applications dans tous les domaines où il est souhaitable de réduire le nombre d'informations nécessaires pour représenter efficacement une image numérique, pour la stocker et/ou la transmettre. Par exemple, l'invention peut être utilisée pour la transmission d'images via le réseau Internet. Dans ce cadre, elle permet l'animation de scènes 3D avec une visualisation en temps réel, bien que le débit ne soit pas constant ni garanti. L'invention peut, dans ce cas, être une primitive d'un langage de transmission de données tel que VRML.

Parmi les autres applications envisageables, on peut citer le stockage de données animées sur CD-ROM (ou support de données équivalent), les applications multi-utilisateurs, la télévision numérique,...

L'invention propose une amélioration aux méthodes dites "à ondelettes", qui permettent de représenter un maillage comme une succession de détails ajoutés à un maillage de base. La théorie générale de cette technique est notamment décrite dans l'article de M. Lounsberry, T. DeRose et J. Warren, "Multiresolution analysis for surfaces or arbitrary topological type" (ACM Transaction on Graphics,Vol. 16, No. 1, pp.34-73).

Une méthode de mise en oeuvre est présentée dans l'article de M.Eck, T.DeRose, T.Duchamp, H.Hoppe, M. Lounsberry et W. Stuetzle, "Multiresolution analysis of arbitrary meshes" (Computer Graphies Proceedings 1995). Il propose d'utiliser la technique de partitionnement connue sous le nom de "triangulation de Delaunay", dans le cadre de maillages multi-résolutions.

La méthode de Eck et al. comprend les étapes suivantes :

- étant donné un maillage M, on effectue (idéalement) une triangulation de Delaunay de ce maillage, c'est à dire une partition particulière de sa surface en zones "topologiquement triangulaires";
- on déduit de cette triangulation un maillage simplifié $M_o$ en faisant correspondre une facette triangulaire à chaque composante de la partition ;
- on détermine la paramétrisation $\rho$ entre $M_0$ et M facette par facette en minimisant une énergie élastique particulière. On obtient ainsi une approximation d'une fonction harmonique, qui a l'avantage d'être bijective;
- disposant de $\rho$, on applique les filtres pour obtenir les coefficients d'ondelettes.

Cette technique présente un certain nombre d'inconvénients, notamment en ce qui concerne la longueur des temps de calcul et l'efficacité de la compression de données obtenue.

Par ailleurs, il est nécessaire que toutes les données soient transmises au terminal, pour que l'objet puisse être reconstruit de façon reconnaissable. Or, dans de nombreuses applications, il est souhaitable que cet objet puisse être reconstruit par phases successives (grossièrement tout d'abord, puis par affinements successifs). Plus généralement, la fidélité visuelle des représentations de l'objet selon la méthode connue n'est pas toujours assurée.

On connaît également d'autres approches de la simplification de maillage que la mise en oeuvre d'une décomposition en ondelettes. Ainsi, le document EP-0 784 291 présente une approche géométrique. Il s'agit, sans préciser de solutions particulières, d'éliminer certaines facettes de façon à respecter au mieux la maillage de base. Du fait des spécifités des ondelettes, ces principes généraux ne peuvent pas non plus être appliqués.

L'invention a notamment pour objectif de pallier ces inconvénients de l'état de la technique.

Plus précisément, un objectif de l'invention est de fournir un procédé de codage d'un maillage source, qui assure un gain en compression, c'est-à-dire une réduction du nombre de coefficients d'ondelettes, par rapport aux techniques connues.

Un autre objectif de l'invention est de fournir un tel procédé, qui présente une meilleure fidélité géométrique, ou visuelle, avec l'objet source.

L'invention a également pour objectif de fournir un tel procédé, qui permette une reconstruction successive de l'objet, celui-ci étant reconnaissable, sous une représentation grossière, très rapidement.

De même, un autre objectif de l'invention est de fournir un tel procédé, permettant d'adapter le degré de précision de la reconstruction d'un objet, en fonction de critères divers, tels que la puissance du terminal, le débit disponible, la position de l'objet dans la scène, un choix de l'utilisateur,...

Ces objectifs, ainsi que d'autres qui apparaîtront par la suite, sont atteints selon l'invention par le procédé défini dans la revendication 1 ci-jointe.

En d'autres termes, l'invention repose notamment sur l'observation que la technique connue ne tient pas compte des lignes de discontinuité, c'est-à-dire des ensembles d'arêtes contigues formant des angles importants au voisinage de zones pouvant être considérées comme lisses.

Par ailleurs, on notera que les étapes de détection et d'affectation sont effectuées lors d'un unique traitement. Il n'est pas nécessaire de connaître ou de rechercher préalablement l'ensemble des discontinuités pour effectuer ce traitement, la détection faisant partie de ce dernier.

Par discontinuité, on entend dans la présente demande de brevet tout ensemble d'attributs des facettes contigues qui est contenu dans au moins deux facettes et qui présente une différence supérieure à au moins un seuil (éventuellement variable), selon un critère prédéterminé.

Ainsi que cela est décrit par la suite, il peut s'agir d'un attribut géométrique, ou d'orientation. Dans ce cas, une discontinuité peut être un ensemble d'arêtes contigues tel que chacune des arêtes est contenue par au moins deux facettes formant un angle non négligeable, selon le critère choisi.

Plus généralement, l'invention peut s'appliquer à tout attribut spécifique des facettes, tel que la couleur ou la texture. Par exemple, on peut prévoir qu'une discontinuité est détectée si la différence de couleur est importante.

Bien sûr, plusieurs critères de discontinuité peuvent être considérés pour un même maillage (couleur et orientation par exemple).

Selon l'invention, en revanche, les lignes de discontinuité sont directement approchées par des segments, et non par des parties intérieures de faces. Dans cette dernière situation, que l'on rencontre avec une triangulation de Delaunay, on est en effet obligé de poursuivre beaucoup plus loin la subdivision des facettes dans le remaillage, ce qui entraine la création de coefficients d'ondelettes à des niveaux de détail superflus (voire à repésenter un maillage comme une somme infinie de détails alors qu'un nombre fini aurait suffi à le représenter exactement).

Le fait qu'une triangulation de Delaunay ne permette pas de spécifier les lignes de discontinuité comme images d'arêtes du maillage $M_0$, contrairement à l'invention, explique l'inefficacité de cette méthode à la fois pour coder et transmettre progressivement des maillages comportant des lignes de discontinuité. Inversement, on comprend aisément que l'invention permet une reconstruction progressive, le maillage simple $M_0$ permettant déjà une reproduction grossière.

Il convient de noter que l'observation de l'intérêt de la prise en compte des discontinuités n'est pas évidente pour l'homme du métier. Il repose sur une approche nouvelle consistant à considérer tout d'abord l'objet à traiter, alors que l'homme du métier tente généralement d'améliorer l'aspect mathématique, général, du problème. Par ailleurs, il répond de façon efficace et simple à des problèmes cruciaux, pour lesquels des recherches importantes ont été effectuées sans aboutir à ce résultat.

De façon avantageuse, ladite détermination du maillage simple ($M_o$) comprend une étape de recherche de zones, ou composantes, dudit maillage source (M), constituées de facettes dudit maillage source (M) respectant un critère de coplanarité prédéterminé, comprenant lesdites étapes de détection et d'affectation.

Selon un mode de réalisation préférentiel de l'invention, ladite étape de détection d'une ligne de discontinuité comprend une étape de comparaison de l'angle formé par deux facettes dudit maillage source à un angle seuil $E_1$ prédéterminé, l'arête entre lesdites facettes étant considérée comme une ligne de discontinuité si ledit angle est supérieur audit seuil $E_1$.

Avantageusement, ladite étape de recherche de composantes respectant un critère de coplanarité met en oeuvre, pour l'incorporation d'une facette dudit maillage source dans une desdites composantes, au moins une des opérations suivantes :

- détection d'une variation importante sur l'ensemble de ladite composante ;
- contrôle de la connexité topologique de ladite composante.

Notamment, ladite opération de détection d'une variation importante peut comprendre une comparaison de l'angle maximum formé par ladite facette à incorporer et toutes les autres facettes de ladite zone composante est inférieur à un seuil $E_2$ prédéterminé.

Par ailleurs, ladite opération de contrôle de la connexité comprend avantaguesement la limitation du cardinal de ladite composante à une borne M prédéterminée.

Dans ce cas, si ladite composante n'est pas simplement connexe, on peut réitérer l'étape de recherche d'une composante avec une nouvelle valeur de ladite borne M, inférieure à la précédente.

De façon avantageuse, le procédé comprend également une étape de regroupement de composantes, lorsque celles-ci appartiennent à une portion dudit maillage source (M) respectant un critère de planéité approximative à grande échelle.

Cet aspect est complémentaire de celui décrit préalablement, et repose sur la même approche. Il propose une amélioration, en terme d'efficacité, de la troisième étape de la méthode de Eck décrite en préambule (la première caractéristique de l'invention améliorant quant elle la première étape de cette même méthode).

Ladite étape de regroupement peut par exemple mettre en oeuvre un calcul de normale moyenne pour chacune desdites composantes, deux composantes pouvant être regroupées si l'angle entre leurs normales moyennes est inférieur à un seuil prédéterminé.

Ensuite, de façon préférentielle, on détermine, à partir desdites composantes, ledit maillage simple ($M_o$) et l'image par une paramétrisation prédéterminée des arêtes dudit maillage simple ($M_o$).

Ainsi, selon un mode de réalisation préférentiel, pour chacune desdites composantes, on construit une courbe dans R$^3$ telle que :

- ladite courbe est une union de segments ;
- si un sommet sur le bord de ladite composante appartient à au moins deux autres composantes, alors il appartient à ladite courbe ;
- si deux sommets appartenant à au moins deux autres composantes sont reliés par un chemin contenu dans le bord de ladite composante et ne contenant aucun autre point ayant cette propriété, alors le segment défini par lesdits deux sommets appartient à la courbe, et réciproquement.

Lesdites composantes sont ensuite, de façon avantageuse, décomposées en facettes triangulaires, correspondant audit maillage simple ($M_o$).

Préférentiellement, la détermination desdits coefficients dans une base d'ondelettes met en oeuvre une subdivision de chacune desdites facettes du maillage simple ($M_o$), correspondant à la définition de nouveaux sommets sur lesdites arêtes.

Selon un mode de réalisation avantageux, le maillage intérieur, représenté par l'image des nouveaux points intérieurs de chacune desdites facettes du maillage simple ($M_o$) n'est pas mémorisé, mais déduit à partir desdits nouveaux sommets.

Par exemple, l'image des nouveaux points intérieurs peut être déterminée selon une des techniques suivantes :

- association à chaque milieu d'arête du milieu du chemin représentant son image ;
- association à chaque milieu d'arête du point du chemin correspondant minimisant la distance de Hausdorff entre ce chemin et les deux nouveaux segments formés.

Les images des points des bords des facettes répresentant une composante étant déterminées, les images des points intérieurs sont par exemple déterminées selon une des techniques suivantes :

- par projection ;
- par calcul de la fonction harmonique correspondante ;
- par minimisation du nombre de subdivisions pour une précision prédéterminée.

Le procédé de l'invention s'applique avantageusement à de nombreux domaines, et notamment :

- affichage d'objets maillés en trois dimensions sur un écran ;
- affichage progressif d'objets maillés en trois dimensions sur un écran, lesdits coefficients d'ondelettes étant pris en compte au fur et à mesure de leur arrivée ;
- affichage d'objets maillés en trois dimensions sur un écran à au moins deux niveaux de détail, un niveau de détail correspondant à un sous-ensemble desdits coefficients d'ondelettes ;
- affichage de parties différentes d'un objet maillé avec au moins deux niveaux de détail différents ;
- compression d'un maillage d'un objet maillé.

D'autres caractéristiques et avantages de l'invention apparaitront plus clairement à la lecture de la description suivante d'un mode de réalisation préférentiel de l'invention, donnée à titre de simple exemple illustratif et non limitatif, et des dessins annexés, parmi lesquels :

- la figure 1 est un organigramme simplifié du principe de la méthode de codage "à ondelettes", connue en elle-même ;
- la figure 2 est un organigramme décomposant l'étape de détermination du maillage simple $M_0$ de la figure 1, selon le procédé de l'invention ;
- les figures 3A à 3D sont des exemples du traitement effectué sur un exemple d'objet ;
- la figure 4 illustre le principe de la triangulation d'une composante ;
- la figure 5 présente un exemple de paramétrisation d'un maillage par subdivisions successives, discuté en annexe.

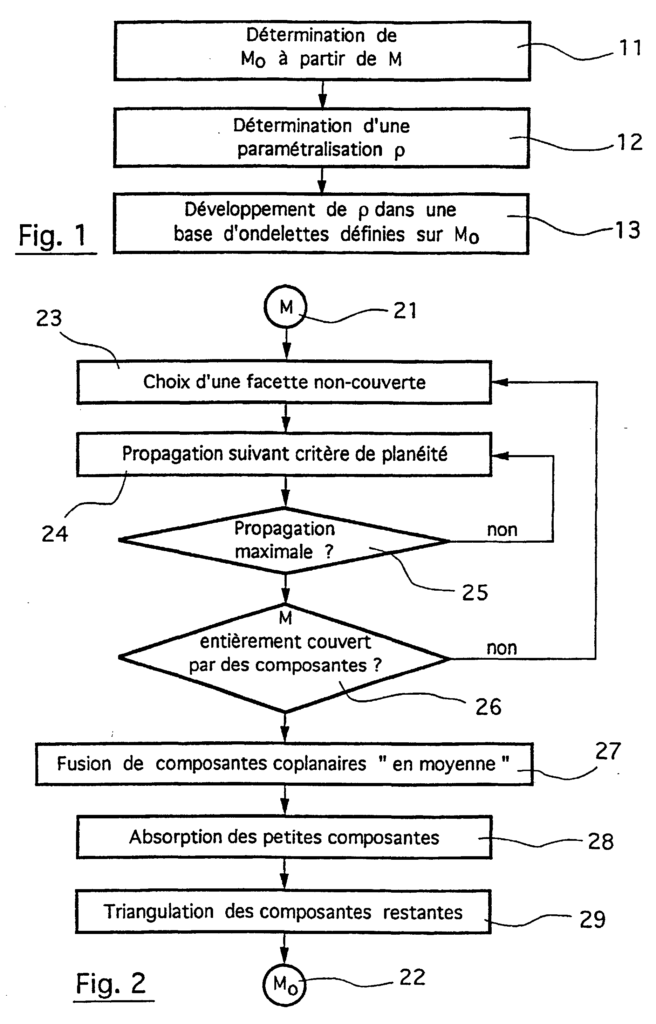

L'invention a donc pour cadre la représentation multi-échelle d'un objet maillé, selon les méthodes dites "à ondelettes", dont le principe général est illustré par la figure 1.

Une telle méthode peut se décomposer en trois grandes étapes :

- la détermination 11 d'un maillage simple $M_0$, à partir d'un maillage source M à coder ;
- la détermination 12 d'une paramétrisation $\rho$ ;
- le développement 13 de $\rho$ dans une base d'ondelettes définies sur $M_0$.

L'annexe (qui fait partie de la présente description) décrit plus en détail ces différentes opérations.

L'invention concerne plus précisément l'étape 11 de détermination d'un maillage simple $M_0$. Comme déjà indiqué, l'invention propose notamment de définir les lignes de discontinuités comme images d'arêtes de $M_0$. De cette manière, ces lignes sont progressivement approchées au moment du remaillage par les divisions successives des arêtes $M_0$, qui rendent immédiatement, c'est à dire dès le premier niveau de détails, l'impression de discontinuité de la normale.

Les avantages résident, notamment, à la fois dans un gain en compression, c'est à dire en nombre de coefficients d'ondelettes, et en fidélité géométrique. Les lignes de discontinuités étant directement représentées par des arêtes, et non plus approchées par des zones régulières. Pour les mêmes raisons, le maillage $M_0$, comportant déjà les lignes de discontinuités de M, est plus ressemblant au maillage original, et peut donc être utilisé directement comme représentation grossière de M, sans ajout de détails préalables comme c'était le cas avec les méthodes précédentes.

Les modifications successives apportées par les coefficients d'ondelettes correspondent donc vraiment à des détails complémentaires, et non plus à des modifications de la forme globale de l'objet, qui est maintenant établie dès la première représentation.

Dans le mode de réalisation décrit, le procédé de l'invention a été implémentée en langage C sur un micro-ordinateur de type "PC". Elle a été incorporée dans un procédé de paramétrisation-décomposition-reconstruction, qui, prenant en entrée un maillage M représenté comme une union de facettes (liste de points suivie d'une liste de facettes dont les sommets sont parmi ces points), détermine un maillage $M_0$ et une paramétrisation de M par $M_0$, puis développe cette paramétrisation dans une base d'ondelettes et renvoit en sortie les coefficients d'ondelettes triés par norme décroissante. A partir de ces coefficients, le procédé peut aussi reconstruire l'objet remaillé à un certain niveau de détail, ou afficher complètement M de manière progressive.

Les différentes étapes de la mise en oeuvre peuvent parfois avoir des variantes locales, qui sont indépendantes les unes des autres, et qui seront donc spécifiées au fur et à mesure.

Le fichier d'entrée décrivant le maillage M est un fichier texte contenant la liste des points du maillage suivie de la liste des facettes triangulaires décrites par trois points de la liste précédente. Il est stocké en mémoire avec les relations d'adjacence entre sommets et entre facettes, ainsi que diverses informations, comme la couleur des facettes ou les coordonnées de texture.

Les relations d'adjacence entre faces permettent de dresser un graphe dont les sommets sont les faces et les arcs la relation de partage d'une arête. C'est avec ce graphe que l'on va partitionner le maillage M en composantes simplement connexes qui ne pourront contenir de lignes de discontinuités que sur leur bord.

Pour cela, on commence par choisir une facette quelconque sur le maillage, qui sera dans la première composante. On dresse une liste L de facettes à traiter, qui est au départ réduite à la facette considérée. Le traitement d'une facette consiste à la supprimer de la liste, puis à y ajouter ses voisins qui vérifient un certain critère de coplanarité dont un exemple est décrit dans la suite.

On obtient ainsi une propagation de la composante sur le graphe suivant le critère choisi. On s'arrête lorsque la liste est vide, c'est à dire lorsqu'il n'existe plus de point dans le voisinage de la composante considérée qui vérifie le critère de coplanarité.

Ce critère doit permettre de se propager sur des zones relativement planes sans passer de lignes de discontinuités. Par exemple, on peut n'autoriser la propagation d'une facette à une autre que si les trois conditions sont satisfaites :

- l'angle formé par les deux facettes est inférieur à un seuil $E_1$ ;
- l'angle maximum formé par la facette testée et toutes les facettes de la composante n'excède pas un seuil $E_2$ ;
- le cardinal de la composante n'excède pas une borne M.

La première condition s'impose naturellement. La deuxième évite de se propager dans des endroits "localement lisses" mais avec des variations importantes sur une échelle plus grande. La troisième condition complète la deuxième, mais permet aussi de contrôler le type topologique de la composante, afin que celle-ci soit simplement connexe, ce qui n'est pas nécessaire, comme dans les méthodes antérieures, mais préférable du point de vue de la régularité du remaillage qui sera opéré sur la composante.

Ainsi, une fois qu'une composante a été déterminée, on effectue un test pour vérifier qu'elle est bien simplement connexe, et si ce test échoue, on recommence en diminuant la borne M, qui peut être choisie au départ comme un pourcentage du nombre de facettes total du maillage M.

A l'issue du partitionnement, il se peut que la première condition ait été trop forte, et ait empêché le regrou-

pement de facettes qui, bien que formant des angles importants les unes avec les autres, sont situés sur une portion du maillage assez plane à grande échelle.

Pour corriger ces formations de composantes inutiles, on calcule une normale moyenne pour chaque composante, que l'on utilise pour en regrouper certaines. Par exemple, si une composante s'avère avoir un cardinal trop petit par rapport à ses voisines, elle peut être amalgamée avec celle qui a la normale moyenne la plus proche. De même, deux composantes de tailles quelconques peuvent être fusionnées si l'angle entre leurs normales moyennes n'excède pas un seuil.

De ce partitionnement on déduit à la fois le maillage de base $M_0$ et l'image par la paramétrisation recherchée des arêtes de $M_0$ : pour chaque composante on construit la courbe dans $R^3$ définie comme suit :

- la courbe est une union de segments ;
- si un sommet sur le bord de la composante considérée appartient à au moins deux autres composantes, alors il appartient à la courbe ;
- si deux sommets a et b appartenant à au moins deux autres composantes sont reliés par un chemin contenu dans le bord de la composante et ne contenant aucun autre point ayant cette propriété, alors le segment [a,b] appartient à la courbe, et réciproquement.

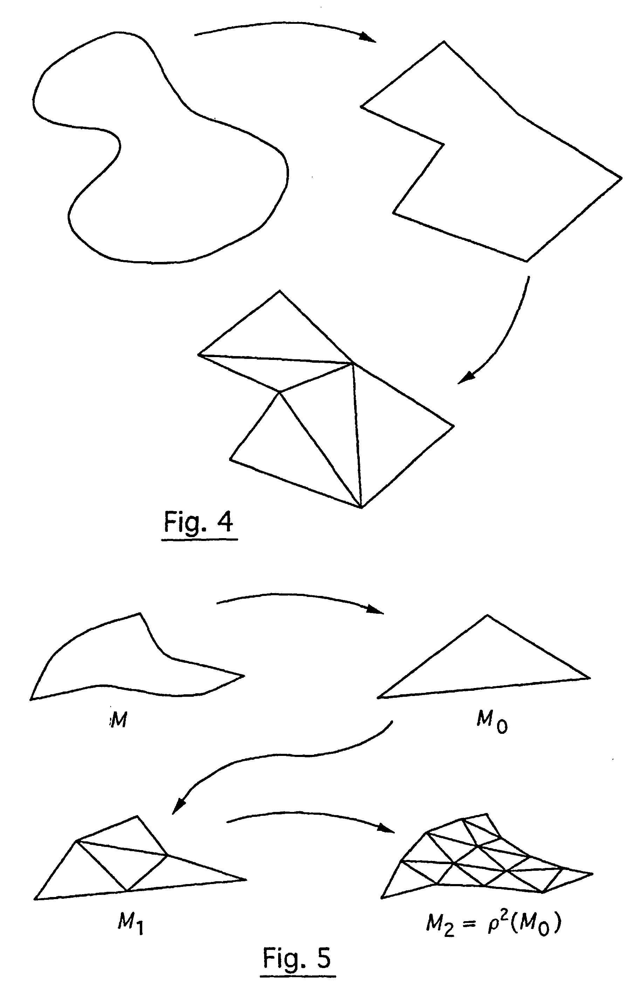

Si les composantes sont simplement connexes, ces courbes sont fermées et connexes. Ces dernières peuvent être ramenées à un plan, sur lequel elles délimitent un domaine qui est triangulé, selon le principe illustré en figure 4. Cette traingulation induit un ensemble de facettes triangulaires dans $R^3$ dont les arêtes contiennent la courbe intiale. Le maillage $M_0$ est défini comme l'ensemble de toutes les facettes ainsi créées par la partition de M en composantes planes.

Les bords des composantes sont déclarés comme image des arêtes de $M_0$ appartenant aux courbes initiales, arête par arête. Ainsi, si l'on considère l'ensemble des facettes de $M_0$ engendrées par une composante particulière, on dispose de l'image globale de chaque arête sur le bord de cet ensemble, sous forme de chemins, qui sont des courbes sur le maillage initial M.

Les subdivisions successives des facettes considérées induisent des subdivisions des arêtes du bord, que l'on peut représenter par l'apparition de nouveaux sommets sur ces arêtes. Il peut être avantageux de déterminer la restriction de la paramétrisation à l'ensemble de ces nouveaux points, puis d'en déduire le remaillage "intérieur", c'est à dire l'image des nouveaux points intérieurs.

L'image des points du bord dépend de la forme que l'on souhaite pour le remaillage. Si l'on veut obtenir des faces assez homogènes en superficie, par exemple dans l'optique d'appliquer un lissage de Gouraud, on peut associer à chaque milieu d'arête le milieu (au sens de la longueur) du chemin représentant son image. Par contre si l'on souhaite minimiser le nombre de subdivisions pour une précision géométrique donnée, on peut définir comme image du milieu d'un segment le point du chemin correspondant qui minimise la distance de Hausdorff entre ce chemin et les deux nouveaux segments formés.

Les images des points du bord de l'ensemble de facettes représentant la composante étant déterminées, les images des points intérieurs peuvent être choisies soit par projection, si la composante est suffisamment plate, soit par calcul de la fonction harmonique correspondante, c'est à dire l'unique homéomorphisme de l'ensemble des facettes représentant une composante dont l'image du bord est fixée et qui est de dispersion métrique minimale. On peut également utiliser une méthode hybride destinée à minimiser le nombre de subdivisions pour une précision donnée, et ainsi minimiser le nombre de coefficients d'ondelettes.

Une fois déterminée, la paramétrisation est stockée en mémoire sous une forme adaptée au développement en ondelettes : le remaillage est représenté uniquement par une liste de sommets qui pointent sur les deux extrémités du segment qui a été subdivisé pour leur donner naissance. Cette information est suffisante lors de l'utilisation d'ondelettes ayant un support relativement limité ("lazy wavelets" ou "o-disk wavelets"). Dans tous les autres cas, il faut rajouter pour chaque sommet l'ensemble de ses voisins.

La phase d'analyse, qui décompose le remaillage en une liste de coefficients d'ondelettes peut alors être effectuée naturellement.

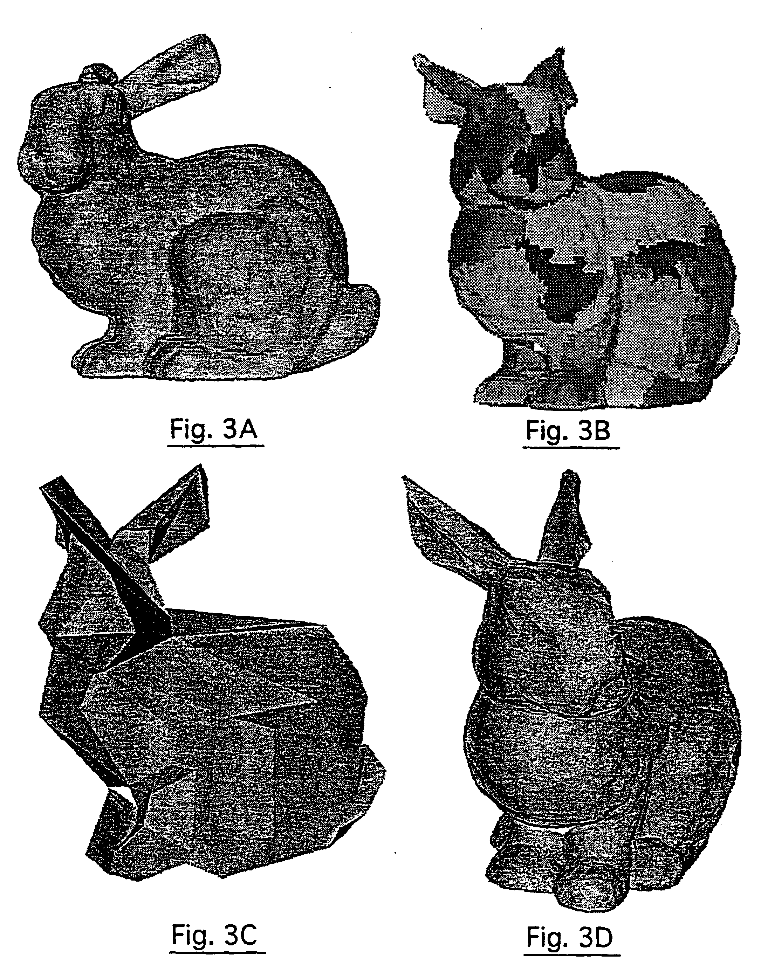

Le procédé décrit ci-dessus peut être illustré par l'organigramme de la figure 2. On commente rapidement cet algorithme, en relation avec l'exemple de traitement des figures 3A à 3D (illustrant un lapin en 3D). On renvoie pour plus de détails à la description qui précède.

On considère en entrée, un maillage source M 21 (illustrée par la figure 3A), et on souhaite obtenir une maillage simple $M_0$ 22 (illustrée par la figure 3C).

On sélectionne tout d'abord une facette non traitée (23) dans le maillage source 21, qui se présente sous la forme d'une liste de facettes triangulaires. A partir de cette facette sélectionnée, on cherche (24) les facettes voisines susceptibles d'être regroupées avec la facette sélectionnée, car faisant partie d'une même surface sensiblement place (c'est-à-dire sans discontinuité). En d'autres termes, on met en oeuvre une propagation de facette en facette du maillage source selon un critère de planéité, pour déterminer des zones maximisées relativement planes.

Pour contrôler cette propagation, on met en oeuvre un test 25 de contrôle de la propagation maximale, après chaque ajout de facettes. Il s'agit notamment d'interrompre la propagation si une discontinuité est détectée (angle supérieur à $E_1$ entre deux facettes voisines), mais également de contrôler l'évolution à plus grande échelle sur l'ensemble du regroupement, ou composante (angle supérieur à $E_2$ entre deux facettes quelconques, contrôle de la connexité de la composante).

Lorsque l'on a atteint la propagation maximale, on vérifie (26) si l'ensemble des facettes de M a été traité. Sinon, on reprend à l'étape 23 pour une nouvelle facette.

Une fois toutes les facettes traitées, on tente à nouveau de réduire le nombre de composantes (27), en regroupant celles que l'on peut considérer coplanaires "en moyenne". Plus précisément, on fusionne les composantes dont l'angle entre les normales moyennes est inférieur à un seuil.

Ensuite on tente de supprimer les composantes de petite taille (28), en les regroupant à la composante voisine présentant la normale moyenne la plus proche.

On obtient ainsi un partitionnement du type illustré en figure 3B.

Pour chaque composante restante, on effectue une triangulation (29), telle qu'illustrée en figure 3, selon une technique connue en soi, choisie en fonction des besoins.

Ce traitement permet d'obtenir le maillage $M_0$ tel qu'illustré par la figure 3C. On note que le lapin est déjà reconnaissable, à ce niveau, sous une forme grossière. On affine ensuite cette représentation. La reconstruction complète, à partir des coefficients d'ondelettes, permet d'obtenir le résultat présenté en figure 3D, qui est très proche du maillage initial (figure 3A).

Il convient de noter que certaines étapes, et notamment les étapes 27 et 28, sont optionnelles. Par ailleurs, d'autres critères de sélection que ceux indiqués peuvent être utilisés (en remplacement ou en combinaison), en particulier pour les étapes 25, 27, 28, et 29.

Cet exemple est basé sur l'orientation des facettes. On comprend aisément que d'autres attributs des facettes, tels que la couleur ou la texture, peuvent être traités de la même façon (indépendamment ou simultanément, selon les besoins).

Comme indiqué en préambule, l'invention trouve des applications dans de nombreux domaines. Elle permet en effet de diminuer le nombre de coefficients transmis pour représenter un maillage, donc de transmettre plus rapidement des environnements dans le cadre par exemple de la navigation interactive.

En plus de leurs propriétés intrinsèques de compression, les coefficients d'ondelettes peuvent être quantifiés suivant les techniques classiques de codage afin d'augmenter le gain en compression.

Ce gain peut évidemment bénéficier au stockage de scènes comportant des objets maillés, permettant ainsi aux terminaux de garder en mémoire la totalité de la scène visualisée.

Par ailleurs, l'invention permet une transmission progressive correspondant à une succession d'ajouts de détails au lieu de modifications de la forme globale des objets, permettant une utilisation immédiate des objets en cours de transmission sans avoir a attendre de disposer d'une version assez fidèle pour pouvoir être affichée.

Cette transmission progressive peut se faire de manière globale sur les objets, c'est à dire en triant les coefficients par norme décroissante, ou locale, de manière à détailler une zone particulière, en triant les coefficients selon la position des perturbations qu'ils provoquent.

**ANNEXE**

La méthode générale utilisée pour coder et reconstruire des maillages grâce aux ondelettes consiste à trouver un maillage comportant peu de facettes qui soit homéomorphe au maillage de départ, ainsi qu'un homéomorphisme passant de l'un à l'autre. Cet homéomorphisme, ou paramétrisation, appartient à l'espace vectoriel des fonctions continues définies sur le maillage simple, et peut donc être développé dans une base de cet espace. En particulier, les bases d'ondelettes donnent lieu à des developpements "hiérarchiques", particulièrement bien adaptés à la notion de détails que l'on souhaite exploiter dans le codage et la transmission progressive de maillages.

Ainsi, disposant d'un maillage $M$ à coder, on commence par trouver un maillage $M_0$ qui soit du même type topologique que $M$ mais comportant peu de facettes. On effectue alors un remaillage de $M$ à partir de $M_0$, en subdivisant les facettes de $M_0$ et en modifiant leur position pour approcher $M$, créant ainsi un maillage $M_1$. On procède de même avec $M_1$, et ainsi de suite jusqu'à ce que le mailage $M_j$ soit proche, à une tolérance d'erreur $\varepsilon_1$ donnée, du maillage $M$ de départ ; c'est ce remaillage qui induit une paramétrisation de $M$ par $M_0$ (fig. 5).

Les bases d'ondelettes permettent de représenter la paramétrisation comme une somme de modifications locales de $M_0$. La donnée du maillage $M_0$ et de ces modifications est suffisante pour représenter le maillage initial $M$.

En pratique, on utilise des ondelettes provenant d'une analyse multi-résolution adaptée à la forme des objets maillés, c'est à dire formée d'espaces de fonctions affines par morceaux: si on note $C^0(M_0)$ l'espace des fonctions continues de $M_0$ dans **R** et, pour $j > 0$, $M_j$ le maillage obtenu en subdivisant canoniquement chaque facette de $M_{j-1}$ en

quatre, on définit le sous-espace $S_j$ de $C^0(M_0)$ engendré par les fonctions affines par morceaux sur $M_0$ qui valent 1 sur un sommet donné de $M_j$ et 0 sur tous les autres. Les $S_j$ ont la propriété que $S_j \in S_{j+1}$ et leur union est dense dans $C^0(M_0)$ : intuitivement, les maillages images des éléments de $S_j$ sont d'autant plus détaillés que $j$ est grand.

Les "détails" représentés par $S_{j+1}$ mais pas par $S_j$ correspondent à l'espace $W_j$, $W_j$ désignant un supplémentaire de $S_j$ dans $S_{j+1}$. Si $\psi^j$ représente un ensemble de fonctions qui forment une base de $W_j$, et $\phi^0$ un ensemble de fonctions formant une base de $S_0$, alors

$$\phi^0 \cup \bigcup_{j \geq 0} \psi^j$$

forme une base de $C^0(M_0)$: toute fonction continue $\rho$ défini sur $M_0$ à valeurs dans $\mathbf{R}^3$ s'écrit de manière unique sous la forme :

$$\rho = \sum_i c_i \phi_i^0 + \sum_{j \geq 0} \sum_i d_i^j \psi_i^j,$$

où les coefficients $(c_i)_i$ et $(d_i^j)_{i,j}$ appartiennent à $\mathbf{R}^3$. Ce sont les $(d_i^j)_{i,j}$ que l'on appelle coefficients d'ondelettes et qui correspondent à des détails ajoutés à une approximation grossière représentée par les $(c_i)_i$.

A l'issue du remaillage, on dispose d'un maillage $M_j$ approchant géométriquement $M$ à $\varepsilon_1$ près, et image d'un homéomorphisme $\rho_j$ pouvant s'écrire

$$\rho^j = \sum_i c_i^j \phi_i^j.$$

Les passages des coefficients $(c_i^j)_{i,j}$ aux coefficients $(c_i)_i$ et $(d_i^j)_{i,j}$ et inversement se font par des applications linéaires appelées banc de filtres. Ces applications linéaires sont données directement par les relations entre fonctions de bases des espaces $S_j$, $W_j$ et $S_{j+1}$.

## Revendications

1. Procédé de codage d'un maillage source (M) représentatif d'un objet en trois dimensions, dans lequel on détermine un maillage simple ($M_0$) présentant un nombre réduit de facettes définies chacunes par des sommets et des arêtes, puis des coefficients dans une base d'ondelettes, correspondant à des modifications locales dudit maillage simple ($M_0$),
   **caractérisé en ce que** la détermination (11) dudit maillage simple ($M_0$) comprend :

   - une étape (24) de recherche de zones, ou composantes, dudit maillage source (M), constituées de facettes dudit maillage source (M) respectant un critère de coplanarité prédéterminé, une facette dudit maillage source étant incorporée dans une desdites composantes lorsque l'angle maximum formé par ladite facette à incorporer et toutes les autres facettes de ladite composante est inférieur à un seuil $E_2$ prédéterminé ; et
   - une étape (27) de regroupement de composantes mettant en oeuvre un calcul de normale moyenne pour chacune desdites composantes, deux composantes pouvant être regroupées si l'angle entre leurs normales moyennes est inférieur à un seuil prédéterminé.

2. Procédé de codage selon la revendication 1, **caractérisé en ce que** ladite étape (24) de recherche comprend les étapes suivantes :

   - détection dans ledit maillage source (M) d'au moins une ligne de discontinuité ;
   - affectation de ladite ligne de discontinuité à au moins une desdites facettes du maillage simple ($M_0$), en tant qu'arête.

3. Procédé de codage selon la revendication 2, **caractérisé en ce que** ladite étape de détection d'une ligne de discontinuité comprend une étape de comparaison de l'angle formé par deux facettes dudit maillage source à un angle seuil $E_1$ prédéterminé, l'arête entre lesdites facettes étant considérée comme une ligne de discontinuité si ledit angle est supérieur audit seuil $E_1$.

4. Procédé de codage selon l'une quelconque des revendications 1 à 3, **caractérisé en ce que** ladite étape (24) de recherche de composantes respectant un critère de coplanarité met également en oeuvre une opération de vérification de la connexité topologique de ladite composante, et d'interruption de la formation de ladite composante, en l'absence de connexité topologique.

5. Procédé de codage selon la revendication 4, **caractérisé en ce que** ladite opération de contrôle de la connexité comprend la limitation du cardinal de ladite composante à une borne M prédéterminée.

6. Procédé de codage selon la revendication 5, **caractérisé en ce que** si ladite composante n'est pas simplement connexe, on réitère l'étape de recherche d'une composante avec une nouvelle valeur de ladite borne M, inférieure à la précédente.

7. Procédé de codage selon l'une quelconque des revendications 1 à 6, **caractérisé en ce que**, à partir desdites composantes, on détermine ledit maillage simple ($M_0$) et l'image par une paramétrisation prédéterminée des arêtes dudit maillage simple ($M_0$), en construisant, pour chacune desdites composantes, une courbe dans $R^3$ telle que :

   - ladite courbe est une union de segments ;
   - si un sommet sur le bord de ladite composante appartient à au moins deux autres composantes, alors il appartient à ladite courbe ;
   - si deux sommets appartenant à au moins deux autres composantes sont reliés par un chemin contenu dans le bord de ladite composante et ne contenant aucun autre point ayant cette propriété, alors le segment défini par lesdits deux sommets appartient à la courbe, et réciproquement.

8. Procédé de codage selon l'une quelconque des revendications 1 à 9, **caractérisé en ce que** lesdites composantes sont ensuite décomposées en facettes triangulaires, correspondant audit maillage simple ($M_0$).

9. Procédé de codage selon l'une quelconque des revendications 1 à 8, **caractérisé en ce que** la détermination desdits coefficients dans une base d'ondelettes met en oeuvre une subdivision de chacune desdites facettes du maillage simple ($M_0$), correspondant à la définition de nouveaux sommets sur lesdites arêtes.

10. Procédé de codage selon la revendication 9, **caractérisé en ce que** le maillage intérieur, représenté par l'image des nouveaux points intérieurs de chacune desdites facettes du maillage simple ($M_0$) n'est pas mémorisé, mais déduit à partir desdits nouveaux sommets.

11. Procédé de codage selon l'une quelconque des revendications 9 et 10, **caractérisé en ce que** l'image des nouveaux points intérieurs est déterminée selon une des techniques suivantes :

   - association à chaque milieu d'arête du milieu du chemin représentant son image ;
   - association à chaque milieu d'arête du point du chemin correspondant minimisant la distance de Hausdorff entre ce chemin et les deux nouveaux segments formés.

12. Procédé de codage selon l'une quelconque des revendications 10 et 11, **caractérisé en ce que**, les images des points des bords des facettes représentant une composante étant déterminées, les images des points intérieurs sont déterminées selon une des techniques suivantes :

   - par projection ;
   - par calcul de la fonction harmonique correspondante ;
   - par minimisation du nombre de subdivisions pour une précision prédéterminée.

13. Application du procédé de codage selon l'une quelconque des revendications 1 à 12 à au moins un des domaines suivants :

   - affichage d'objets maillés en trois dimensions sur un écran ;

- affichage progressif d'objets maillés en trois dimensions sur un écran, lesdits coefficients d'ondelettes étant pris en compte au fur et à mesure de leur arrivée ;
- affichage d'objets maillés en trois dimensions sur un écran à au moins deux niveaux de détail, un niveau de détail correspondant à un sous-ensemble desdits coefficients d'ondelettes ;
- affichage de parties différentes d'un objet maillé avec au moins deux niveaux de détail différents ;
- compression d'un maillage d'un objet maillé.


**Patentansprüche**

1. Kodierverfahren eines für einen dreidimensionalen Gegenstand repräsentativen Quellennetzwerkes (M), in dem ein einfaches Netzwerk ($M_0$) festgelegt wird, das eine reduzierte Zahl von jeweils durch Knoten und Kanten definierte Flächen aufweist, gefolgt von Koeffizienten in einer Wavelet-Basis, welche örtlichen Änderungen des einfachen Netzwerkes ($M_0$) entsprechen,
   **dadurch gekennzeichnet, dass** die Festlegung (11) des einfachen Netzwerkes ($M_0$) folgendes umfasst:

   - einen Schritt (24), bei dem Bereiche oder Komponenten des Quellennetzwerkes (M) gesucht werden, bestehend aus Flächen des Quellennetzwerkes (M), die ein vorgegebenes Koplanaritätskriterium erfüllen, wobei eine Fläche des Quellennetzwerkes in einer der Komponenten integriert wird, wenn der größte zwischen der zu integrierenden Fläche und den anderen Flächen dieser Komponente gebildete Winkel kleiner als ein vorgegebener Schwellenwert $E_2$ ist;
   - einen Schritt (27) zur Neugliederung der Komponenten, bei dem für jede dieser Komponenten eine mittlere Normalenberechnung eingesetzt wird, wobei zwei Komponenten neu gegliedert werden können, wenn der Winkel zwischen ihren mittleren Normalen kleiner als ein vorgegebener Schwellenwert ist.

2. Kodierverfahren nach Anspruch 1, **dadurch gekennzeichnet, dass** der Suchschritt (24) die folgenden Schritte umfasst:

   - Auffinden von mindestens einer Diskontinuitätslinie in dem Quellennetzwerk (M);
   - Zuordnung dieser Diskontinuitätslinie zu mindestens einer der genannten Flächen des einfachen Netzwerkes ($M_0$) als Kante.

3. Kodierverfahren nach Anspruch 2, **dadurch gekennzeichnet, dass** der Schritt zum Auffinden einer Diskontinuitätslinie einen Schritt umfasst, bei dem der von zwei Flächen des Quellennetzwerkes gebildete Winkel mit einem vorgegebenen Schwellenwinkel $E_1$ verglichen wird, wobei die Kante zwischen diesen Flächen als Diskontinuitätslinie betrachtet wird, wenn der Winkel größer als der erwähnte Schwellenwert $E_1$ ist.

4. Kodierverfahren nach einem der Ansprüche 1 bis 3, **dadurch gekennzeichnet, dass** der Schritt (24) zum Suchen von Komponenten, die ein Koplanaritätskriterium erfüllen, ebenfalls ein Verfahren zum Prüfen des topologischen Zusammenhangs dieser Komponente und zum Unterbrechen der Bildung dieser Komponente bei fehlendem topologischen Zusammenhang zur Wirkung bringt.

5. Kodierverfahren nach Anspruch 4, **dadurch gekennzeichnet, dass** die Operation zum Prüfen des Zusammenhangs die Begrenzung der Kardinalzahl dieser Komponenten auf einen vorgegebenen Grenzwert M umfasst.

6. Kodierverfahren nach Anspruch 5, **dadurch gekennzeichnet, dass** wenn die erwähnte Komponente nicht einfach zusammenhängend ist, der Schritt zum Suchen einer Komponente mit einem neuen Wert des Grenzwertes M wiederholt wird, der kleiner als der vorherige ist.

7. Kodierverfahren nach einem der Ansprüche 1 bis 6, **dadurch gekennzeichnet, dass** man, ausgehend von den erwähnten Komponenten, das einfache Netzwerk ($M_0$) sowie das Bild durch eine vorgegebene Parametrisierung der Kanten dieses einfachen Netzwerkes ($M_0$) festlegt, wobei für jede der Komponenten eine Kurve im $R^3$ erzeugt wird, für welche folgendes gilt:

   - die Kurve wird aus einer Zusammenfügung von Segmenten gebildet;
   - gehört ein Knoten vom Rand dieser Komponente mindestens zwei weiteren Komponenten an, so liegt er ebenfalls auf der Kurve;
   - sind zwei Knoten, die mindestens zwei weiteren Komponenten angehören, durch einen Weg verbunden, der im Rand dieser Komponente liegt und keinen anderen Punkt mit dieser Eigenschaft umfasst, so liegt das von diesen zwei Knoten gebildete Segment auf der Kurve und umgekehrt.

8. Kodierverfahren nach einem der Ansprüche 1 bis 7, **dadurch gekennzeichnet, dass** die erwähnten Komponenten danach nach dem einfachen Netzwerk ($M_0$) entsprechenden Dreiecksflächen aufgeteilt werden.

9. Kodierverfahren nach einem der Ansprüche 1 bis 8, **dadurch gekennzeichnet, dass** die Ermittlung der erwähnten Koeffizienten in einer Wavelet-Basis das Unterteilen einer jeden Fläche des einfachen Netzwerkes ($M_0$) ins Spiel bringt, was der Definition neuer Knoten auf den erwähnten Kanten entspricht.

10. Kodierverfahren nach Anspruch 9, **dadurch gekennzeichnet, dass** das durch das Bild der neuen inneren Punkte einer jeden Fläche des einfachen Netzwerkes ($M_0$) dargestellte innere Netzwerk nicht gespeichert wird, sondern auf der Grundlage der neuen Knoten deduziert wird.

11. Kodierverfahren nach einem der Ansprüche 9 und 10, **dadurch gekennzeichnet, dass** das Bild der neuen inneren Punkte gemäß einer der folgenden Techniken ermittelt wird:

   - der Mitte einer jeden Kante wird die Mitte des ihr Bild darstellenden Weges zugeordnet;
   - der Mitte einer jeden Kante wird der Punkt des entsprechenden Weges zugeordnet, welcher der Hausdorff-Entfernung zwischen diesem Weg und den zwei neuen gebildeten Segmenten entspricht.

12. Kodierverfahren nach einem der Ansprüche 10 und 11, **dadurch gekennzeichnet, dass** nach dem Ermitteln der Bilder von den Punkten der Flächenränder, die eine Komponente darstellen, die Bilder der inneren Punkte gemäß einer der folgenden Techniken ermittelt werden:

   - durch Projizieren;
   - durch Berechnen der entsprechenden harmonischen Funktion;
   - durch Minimieren der Zahl der Unterteilungen für eine vorgegebene Genauigkeit.

13. Anwendung des Kodierverfahrens nach einem der Ansprüche 1 bis 12 auf mindestens eines der folgenden Bereiche:

   - Anzeige von nach dreidimensionalen Netzwerken aufgeteilten Gegenständen auf einem Bildschirm;
   - fortschreitende Anzeige von nach dreidimensionalen Netzwerken aufgeteilten Gegenständen auf einem Bildschirm, wobei die Wavelet-Koeffizienten fortschreitend nach ihrer Ankunft berücksichtigt werden;
   - Anzeige von nach dreidimensionalen Netzwerken aufgeteilten Gegenständen auf einem Bildschirm mit mindestens zwei Detailebenen, wobei eine der Detailebenen einer Untermenge der erwähnten Wavelet-Koeffizienten entspricht;
   - Anzeige verschiedener Teile eines nach einem Netzwerk aufgeteilten Gegenstandes mit mindestens zwei verschiedenen Detailebenen;
   - Kompression eines einen Gegenstand darstellenden Netzwerkes.

## Claims

1. Method for encoding a source mesh (M) representing an object in three dimensions, in which the following are determined: a simple mesh ($M_0$) having a reduced number of faces, each defined by vertices and edges, then coefficients in a wavelet base corresponding to local modifications of the said simple mesh ($M_0$), **characterised in that** the determination (11) of the said simple mesh ($M_0$) comprises:

   - a step (24) of searching for zones or components of the said source mesh (M) which consist of facets of the said source mesh (M) satisfying a predetermined coplanarity criterion, a facet of the said source mesh being incorporated in one of the said components when the maximum angle formed by the said facet to be incorporated and all the other facets of the said component is less than a predetermined threshold $E_2$; and
   - a component grouping step (27) involving an average normal calculation for each of the said components, two components being groupable if the angle between their average normal is less than a predetermined threshold.

2. Encoding method according to Claim 1, **characterised in that** the said search step (24) comprises the following steps:

   - detection of at least one discontinuity line in the said simple mesh ($M_0$);
   - allocation of the said discontinuity line as an edge to at least one of the said facets of the simple mesh ($M_0$).

3. Encoding method according to Claim 2, **characterised in that** the said step of detecting a discontinuity line comprises a step of comparing the angle formed by two facets of the said source mesh with a predetermined threshold angle $E_1$, the edge between the said facets being regarded as a discontinuity line if the said angle is greater than the said threshold $E_1$.

4. Encoding method according to any one of Claims 1 to 3, **characterised in that** the said step (24) of searching for components satisfying a coplanarity criterion also involves an operation of verifying the topological connectivity of the said component, and of stopping the formation of the said component in the absence of topological conductivity.

5. Encoding method according to Claim 4, **characterised in that** the said operation of checking the connectivity comprises limitation of the cardinal of the said component to a predetermined bound M.

6. Encoding method according to Claim 5, **characterised in that**, if the said component is not simply connected, the step of searching for a component is repeated with a new value of the said bound M, which is less than the previous one.

7. Encoding method according to any one of Claims 1 to 6, **characterised in that**, on the basis of the said components, the said simple mesh ($M_0$) and the image are determined by a predetermined parameterisation of the edges of the said simple mesh ($M_0$) by constructing a curve in $R^3$ for each of the components, such that:

   - the said curve is a union of segments;
   - if a vertex on the border of the said component belongs to at least two other components, then it belongs to the said curve;
   - if two vertices belonging to at least two other components are connected by a path contained in the border of the said component and not containing any other point having this property, then the segment defined by the said two vertices belongs to the curve, and vice versa.

8. Encoding method according to any one of Claims 1 to 9, **characterised in that** the said components are then decomposed into triangular facets corresponding to the said simple mesh ($M_0$).

9. Encoding method according to any one of Claims 1 to 8, **characterised in that** the determination of the said coefficients in wavelet base involves a subdivision of each of the said facets of the simple mesh ($M_0$), corresponding to the definition of new vertices on the said edges.

10. Encoding method according to Claim 9, **characterised in that** the interior mesh represented by the image of the new interior points of each of the said facets of the simple mesh ($M_0$) is not stored, but derived on the basis of the said new vertices.

11. Encoding method according to either one of Claims 9 and 10, **characterised in that** the image of the new interior points is determined according to one of the following techniques:

    - association with each edge middle of the middle of the path representing its image;
    - association with each edge middle of the point of the corresponding path which minimises the Hausdorff distance between this path and the two new segments which are formed.

12. Encoding method according to either one of Claims 10 and 11, **characterised in that**, once the images of the points of the borders of the facets representing a component have been determined, the images of the interior points are determined according to one of the following techniques:

    - by projection;
    - by calculation of the corresponding harmonic function;
    - by minimisation of the number of subdivisions for a predetermined precision.

**13.** Application of the encoding method according to any one of Claims 1 to 12 to at least one of following fields:

- displaying meshed objects in three dimensions on a screen;
- progressively displaying meshed objects in three dimensions on a screen, the said wavelet coefficients being taken into account as they arrive;
- displaying meshed objects in three dimensions on a screen at least at two levels of detail, one level of detail corresponding to one subset of the said wavelet coefficients;
- displaying different parts of a meshed object with at least two different levels of detail;
- compressing a mesh of a meshed object.

```
┌────────────────────────────────┐
│        Détermination  de       │─────── 11
│       M_O   à  partir  de  M    │
└────────────────────────────────┘
                │
                ▼
┌────────────────────────────────┐
│      Détermination  d'une       │─────── 12
│       paramétralisation  ρ      │
└────────────────────────────────┘
                │
                ▼
┌────────────────────────────────┐
│     Développement  de  ρ  dans  une │─────── 13
│     base  d'ondelettes  définies  sur  M_O │
└────────────────────────────────┘
```

Fig. 1

```
                    ( M )────── 21
                      │
                      ▼
23 ──── ┌──────────────────────────────────────┐ ◄─────┐
         │      Choix d'une facette non-couverte │        │
         └──────────────────────────────────────┘        │
                      │                                   │
                      ▼                                   │
         ┌──────────────────────────────────────┐ ◄──┐   │
         │   Propagation suivant critère de planéité │    │   │
24 ────  └──────────────────────────────────────┘    │   │
                      │                               │   │
                      ▼                               │   │
                  ◇ Propagation ◇     non ────────────┘   │
                  ◇  maximale ? ◇────── 25                │
                      │                                   │
                      ▼                                   │
                  ◇      M      ◇                         │
                  ◇ entièrement couvert ◇  non ───────────┘
                  ◇ par des composantes ? ◇
                      │        26
                      ▼
┌──────────────────────────────────────┐
│  Fusion  de  composantes coplanaires  " en moyenne " │─── 27
└──────────────────────────────────────┘
                      │
                      ▼
┌──────────────────────────────────────┐
│     Absorption des petites composantes │─── 28
└──────────────────────────────────────┘
                      │
                      ▼
┌──────────────────────────────────────┐
│   Triangulation  des composantes  restantes │─── 29
└──────────────────────────────────────┘
                      │
                      ▼
                  ( M_O )────── 22
```

Fig. 2

14

Fig. 3A

Fig. 3B

Fig. 3C

Fig. 3D

Fig. 4

$M$        $M_0$

$M_1$        $M_2 = \rho^2(M_0)$

Fig. 5